# EUROPÄISCHE PATENTSCHRIFT

(11) **EP 2 518 292 B1**
(45) Veröffentlichungstag und Bekanntmachung des Hinweises auf die Patenterteilung: **10.01.2018**
(21) Anmeldenummer: 12166079.9
(22) Anmeldetag: 27.04.2012
(51) Int. Cl.: F02C 3/13, F02C 3/34, F02C 6/18

(54) **Verfahren zum Betrieb eines Gasturbinenkraftwerks mit Abgasrezirkulation**
Method for operating a gas turbine power plant with exhaust gas recirculation
Procédé de fonctionnement d'une centrale à turbine à gaz avec recirculation des gaz d'échappement

(30) Priorität: 28.04.2011 CH 7212011
(43) Veröffentlichungstag der Anmeldung: 31.10.2012
(73) Patentinhaber: Ansaldo Energia IP UK Limited, London W1G 9DQ (GB)
(72) Erfinder: Rofka, Stefan, 5415 Nussbaumen (CH); Hoffmann, Jürgen, 5417 Untersiggenthal (CH); Benz, Eribert, 5413 Birmenstorf (CH); Sander, Frank, 5415 Rieden, AG (CH); Nicklas, Martin, 3095 Spiegel b. Bern (CH)
(74) Vertreter: Bernotti, Andrea

(56) Entgegenhaltungen:
- WO-A1-2008/155242
- WO-A1-2010/049277
- WO-A1-2010/139724
- DE-A1-102004 039 164
- US-A1- 2009 129 914
- US-A1- 2009 229 263

## Beschreibung

### TECHNISCHES GEBIET

Die vorliegende Erfindung betrifft ein Verfahren und System zur Regelung des Starts einer Gasturbine mit Abgasrezirkulation sowie ein Gasturbinenkraftwerk zur Durchführung des Verfahrens.

### STAND DER TECHNIK

Die Rezirkulation von Abgasen ist eine Technologie, welche grundsätzlich für unterschiedlichste Zwecke bei Gasturbinen eingesetzt werden kann. So wird Abgasrezirkulation beispielsweise für die Reduktion der NOx- Emission oder zu einer Reduktion des abzuleitenden Abgases vorgeschlagen. Bei der Rezirkulation von Abgasen bei einer Gasturbine wird ein wesentlicher Anteil des Abgases aus dem gesamten Abgasstrom abgezweigt und typischerweise nach Kühlung und Reinigung dem Eingangsmassenstrom der Gasturbine respektive dem Kompressor zugeführt, wobei der rückgeführte Abgasstrom mit frischer Luft vermischt wird, und diese Mischung anschliessend dem Kompressor zugeführt wird.

Vorteilhaft kann durch Abgasrezirkulation der Kohlendioxid- Partialdruck in den Abgasen erhöht werden, um die Leistungsverluste und Wirkungsgradverluste von Kraftwerken mit Kohlendioxid-Abscheidung zu reduzieren. Weiter ist Abgasrezirkulation mit dem Ziel vorgeschlagen worden, die Sauerstoffkonzentration in den Ansauggasen von Gasturbinen zu reduzieren, um dadurch die NOx- Emissionen zu reduzieren.

Zur Abgasrezirkulation beschreibt beispielsweise die US 7536252 B1 ein Verfahren zum Steuern eines Abgasrezirkulationsstroms einer Turbomaschine, der über ein Abgasrezirkulationssystem zu dem Eintritt der Turbomaschine zurückgeführt wird. In diesem Verfahren wird ein Soll- Abgasrezirkulationsanteil bestimmt, wobei der Abgasrezirkulationsanteil als Anteil des Abgasstroms an dem Eintrittsstrom der Turbomaschine definiert ist, und der Ist-Wert auf den Soll- Wert geregelt wird.

Aus der US2009/0145126 ist eine Methode zum Betreiben einer Gasturbine mit Abgasrezirkulation bekannt, bei dem die Abgaszusammensetzung bestimmt wird, und ein Kontrollorgan das eine Regelung der Abgasrezirkulation in Abhängigkeit von der gemessenen Abgaszusammensetzung erlaubt, bekannt. Eine derartige Regelung kann insbesondere beim Start oder Betrieb mit schnellen Transienten im tiefen Lastbereich zu einer instabilen Regelung führen, da die Abgaszusammensetzung stark von dem Anteil an rezirkulierten Abgasen abhängt. Weiter ist die Abgaszusammensetzung, oder die zulässige Zusammensetzung der Eintrittsgase der Gasturbine stark von dem Betriebspunkt der Gasturbine abhängig, so dass ein zuverlässiger Betrieb der Gasturbine mit Abgasrezirkulation für bestimmte Betriebszustände erschwert wird.

Um sicher zu stellen, dass keine brennbaren oder explosiven Brennstoff- Luftgemische in den Rezirkulationsleitung zurückgeblieben sind, wird typischerweise vorgeschlagen, die Rezirkulationsleitungen vor dem Start einer Gasturbine zu spülen, wofür zusätzliche Klappen und Leitungen benötigt werden. Beispielsweise ist aus der EP2060772 ein Purgesystem zum Spülen für ein Abgasrezirkulationssystem bekannt.

Aus der DE102004039164 ist eine Gasturbine mit Abgasrezirkulation bekannt, in der ein abgezweigter Teilstrom des entspannten Rauchgases in einen stromaufwärts der Brennkammer liegenden Teil der Gasturbine zurückgeführt und verdichtet wird. Aus dem verdichteten Gas wird in einem CO2-Separator Kohlendioxid (CO2) abgetrennt. In der Rezirkulationsleitung und in der Zuleitung zu dem CO2-Separator sind Ventile angeordnet.

### DARSTELLUNG DER ERFINDUNG

Der vorliegenden Erfindung ist die Aufgabe gestellt, ein Verfahren zum zuverlässigen Betrieb eines Gasturbinenkraftwerkes mit Abgasrezirkulation bei tiefer Last sowie zum Start und Abstellen der Gasturbine und der Abgasrezirkulation anzugeben.

Erfindungsgemäss wird diese Aufgabe durch den Gegenstand des unabhängigen Anspruchs gelöst. Der Kern der Erfindung ist ein Verfahren zum Betrieb einer Gasturbine mit Abgasrezirkulation, bei welchem die Abgasrezirkulation während des Startens und des Abschaltens der Gasturbine ausgeschaltet ist, und bei dem das Einschalten bzw.

Ausschalten der Abgasrezirkulation in Abhängigkeit von einem Betriebszustand der Gasturbine durchgeführt wird.

Insbesondere wird nach dem Verfahren bei einem Gasturbinenkraftwerk mit Abgasrezirkulation, welches eine Gasturbine einen Abhitzedampferzeuger und einen Abgasteiler, der die Abgase des Gasturbinenkraftwerkes in einen ersten Abgasstrom zur Rezirkulation in einen Ansaugstrom der Gasturbine und in einen zweiten Abgasstrom zur Abgabe an die Umgebung teilt, sowie ein Regelelement zur Regelung des ersten Abgasstroms umfasst, das Regelelement bis zum Überschreiten einer Einschaltlast in einer geschlossenen Position gehalten, so das keine Abgase in Rezirkulationsleitungen gelangen und der gesamte Abgasstrom des Gasturbinenkraftwerkes als zweiter Abgasstrom an die Umgebung abgegeben wird. Erst nach erreichen einer Freigabebedingung, das heißt dem Überschreiten einer Einschaltlast, wird nach dem Verfahren das Regelelement geöffnet, um einen Teil der Abgase als ersten Abgasstrom in den Ansaugstrom zu rezirkulieren. Als Freigabebedingung ist gemäss weiterer Beispiele, die nicht Teil der Erfindung sind, ein Druckgrenzwert, insbesondere der Brennkammer oder Verdichterenddruck, ein Limitwert der Heissgasgastemperatur oder ein Limit des Brennstoffmassenstrom bzw. der Position des Brennstoffregelventils vorgesehen.

Je nach Start-up Prozedur der Gasturbine ist die Verbrennung während des Hochlaufen auf Nenndrehzahl instabil und zusätzliche Änderungen der Randbedingungen sind unerwünscht. Entsprechend einer Ausgestaltung des Verfahrens wird die Abgasrezirkulation daher erst ab erreichen der Nenndrehzahl eingeschaltet.

Gemäss einer weiteren Ausgestaltung wird, um eine Kontamination der Abgasrezirkulationsleitungen mit Brennstoffrückständen zu vermeiden, die Abgasrezirkulation vor oder bei dem Abstellen der Gasturbine abgeschaltet.

Gemäss einer Ausgestaltung wird die Abgasrezirkulation beim Ablasten nach unterschreiten einer Ausschaltbedingung abgeschaltet. Diese ist in einer weiteren Ausführung eine Ausschaltlast.

Als Ausschaltbedingung ist gemäss weiterer Ausführungen ein Druckgrenzwert, insbesondere der Brennkammer oder Verdichterenddruck, ein Limitwert der Heissgasgastemperatur oder ein Limit des Brennstoffmassenstroms bzw. der Position des Brennstoffregelventils vorgesehen.

Insbesondere wird bei der Abzweigung der Abgasrezirkulationsleitungen von der Abgasleitung ein Regelelement vorgesehen, das schliesst, bevor Brennstoffrückstände in die Abgasrezirkulationsleitungen gelangen.

Da die Abgasrezirkulation durch Gebläse und Kühler Hilfsenergie verbraucht, wird in einer Ausführung die Abgasrezirkulation erst ab Generatorsynchronisation oder ab einem bestimmten Lastpunkt vorgesehen. Entsprechend wird die Abgasrezirkulation unterhalb eines definierten Lastpunktes, d.h. unterhalb einer Ausschaltlast ausgeschaltet. Beim Ablasten wird unterhalb dieser Ausschaltlast der gesamte Abgasstrom des Gasturbinenkraftwerkes als zweiter Abgasstrom an die Umgebung abgegeben. Nach einer Ausführung wird die Abgasrezirkulation erst beim Öffnen des Generatorschalters ausgeschaltet.

In einer Ausgestaltung des Verfahrens ist die Ausschaltbedingung kleiner als die Einschaltbedingung. Beispielsweise ist Ausschaltlast kleiner als Einschaltlast, um ein häufiges Ein- und Ausschalten der Abgasrezirkulation bei tiefer Teillast zu vermeiden.

Gemäss einer weiteren Ausführung des Verfahren ist die Einschaltlast kleiner oder gleich der Minimallast der Gasturbine. Sobald der Generator der Gasturbine mit dem Netz synchronisiert ist und der Generatorschalter geschlossen ist, wird in diesem Verfahren das Regelelement der Abgasrezirkulation geöffnet, um einen Teil der Abgase als ersten Abgasstrom in den Ansaugstrom zu rezirkulieren.

Nach einer weiteren Ausführung wird das Regelelement der Abgasrezirkulation beim Öffnen des Generatorschalters geschlossen. Hier wird der gesamte Abgasstrom des Gasturbinenkraftwerkes als zweiter Abgasstrom an die Umgebung abgegeben, sobald der Generatorschalter öffnet.

Bei niedriger Last eines Gasturbinenkraftwerkes können tiefe Heissgastemperaturen zu unvollständiger Verbrennung führen und CO- Emissionen (Kohlenmonoxidemissionen) ansteigen. Um eine weitere Erhöhung der CO- Emissionen durch Abgasrezirkulation, die zu sauerstoffarmen Brenngasen führt, zu vermeiden, wird die Abgasrezirkulation in einer Ausführungsform erst ab einer Last aktiviert, bei der das Kraftwerk längere Zeit stationär betrieben wird. Dies ist typischerweise etwa 20 bis 30% relative Last. Bei dieser Last kann das Kraftwerk mit einem ausreichenden Wirkungsgrad betrieben werden und die Heissgastemperaturen sind hoch genug, um eine saubere Verbrennung mit Abgasrezirkulation zu erlauben.
Je nach Gasturbinentyp kann der Grenzwert für die Aktivierung der Abgasrezirkulation bei bis zu 50% oder 60% relative Last liegen, wobei die relative Last als das Verhältnis von abgegebener Leistung zu der möglichen Vollastleistung bei den jeweiligen Umgebungsbedingungen definiert ist.

Bei einem Abschalten einer Gasturbine können Brennstoffreste in die Abgase gelangen. Wenn die Abgasrezirkulation offen ist, können diese Brennstoffreste auch in die Rezirkulationsleitungen gelangen, die dann vor einem Neustart der Gasturbine aufwändig mit Luft oder einem anderen Gas gespült werden müssen. Um diese Verunreinigung und den Spülvorgang zu vermeiden, wird nach einer Ausführung des Verfahrens das Regelelement schneller geschlossen, als Abgase benötigen, um von der Turbine durch den HRSG zu strömen und zu dem Abgasteiler zu gelangen. Durch ein entsprechend schnelles Schliessen wird verhindert, dass Brennstoffreste in das Abgasrezirkulationssystem gelangen. Ein Spülen des Systems ist somit für einen Neustart nicht erforderlich.

Eine Gasturbine umfast typischerweise einen Verdichter, eine Brennkammer und eine Turbine, die den Verdichter antreibt und nutzbare Leistung abgibt. In einer weiteren Ausführung des Verfahrens, das für die Anwendung in Gasturbinen mit sequentieller Verbrennung, d.h. eine Gasturbine mit einem Verdichter, einer ersten Brennkammer, einer Hochdruckturbine, einer zweiten Brennkammer (sequentieller Brennkammer) und einer Niederdruckturbine, vorgesehen ist, wird vor oder bei einem Ausschalten der zweiten Brennkammer das Regelelement zur Regelung des Rezirkulationsstroms geschlossen. Die zweite Brennkammer wird typischerweise bei Teillast abgeschaltet, während die erste Brennkammer weiter in Betrieb bleibt, um eine stabile saubere Verbrennung zu gewährleisten. Wenn die Eintrittstemperatur in die zweite Brennkammer bei tiefer Teillast niedrig ist, kann beim Abschalten der zweiten Brennkammer unverbrannter Brennstoff die Brennkammer und damit die Niederdruckturbine verlassen. Dies kann beispielsweise bei einem Lastabwurf aus Ölbetrieb geschehen, wenn nach Abschalten der Brennkammer noch die Brennstoffleitungen in den Brenner gespült werden. Um zu verhindern, dass Brennstoffrückstände über die Rezirkulationsleitung in den Verdichtereintritt der Gasturbine gelangen, wird das Regelelement der Rezirkulation vor Abschalten der zweiten Brennkammer geschlossen. Alternativ wird das Regelelement bei oder kurz nach dem Abschalten der zweiten Brennkammer so schnell geschlossen, dass eventuelle Brennstoffrückstände bis zu deren Schliessen noch nicht den Weg von der Brennkammer zu dem Regelelement zurückgelegt haben.

Gemäss einer weiteren Ausführungsform wird das Regelelement zum Regeln der Rezirkulation vor einem Spülen der Ölleitungen des Brennstoffverteilsystems der zweiten Brennkammer geschlossen, damit während des Spülvorganges der gesamte Abgasstrom des Gasturbinenkraftwerkes als zweiter Abgasstrom an die Umgebung abgegeben wird. Nach Abschluss des Spülvorganges kann das Regelelement wieder geöffnet werden und ein Teil der Abgase in den Eintritt der Gasturbine rezirkuliert werden.

Ein Gasturbinenkraftwerk zur Durchführung des Verfahrens mit Abgasrezirkulation umfasse eine Gasturbine mit einem Regler, einen Abhitzedampferzeuger und einen Abgasteiler, der die Abgase in einen ersten Abgasstrom zur Rezirkulation in einen Ansaugstrom der Gasturbine und in einen zweiten Abgasstrom zur Abgabe an die Umgebung teilt, sowie ein Regelelement zur Regelung des ersten Abgasstroms umfasst. Das Regelelement zur Regelung des ersten Abgasstroms ist in einer Zeit schliessbar, die kleiner ist als die Zeit, die Abgase benötigen, um vom Turbineaustritt durch den HRSG bis zu dem Regelelement zu strömen. Typischerweise muss das Regelelement dafür in weniger als 30 Sekunden schliessen können. Die erforderliche Schliesszeit ergibt sich aus dem Abgasvolumenstrom und dem Volumen von Kessel und Abgasleitungen zwischen Gasturbine und Abgasteiler. Die Schliesszeit kann beispielsweise sogar in weniger als 10 Sekunden betragen.

In einem Ausführungsbeispiel wird, um ein schnelles Schliessen der Rezirkulationsleitung zu gewährleisten, zusätzlich zu dem Regelelement zur Regelung des ersten Abgasstroms ein Schnellschlussventil oder eine Schnellschlussklappe im Eintrittsbereich der Rezirkulationsleitung, vorgesehen. Dies ist bei Rezirkulationsleitungen mit grossen Querschnittsflächen vorteilhaft, da die verfügbaren Regelelemente typischerweise nur langsam Fahren können und ein separates Schnellschlussventil günstiger sein kann, als ein Regelelement mit der erforderlichen Schliessgeschwindigkeit bereit zu stellen.
Typischerweise kann die Schnellschlussklappe oder das Schnellschlussventil in weniger als 30 Sekunden schliessen. Sie kann beispielsweise sogar in weniger als 10 Sekunden schliessen. Als Eintrittsbereich der Rezirkulationsleitung ist der Bereich zu verstehen, der unmittelbar an den Strömungsteiler anschliesst. Vorzugsweise sollte das Schnellschlussventil in einer Entfernung von dem Strömungsteiler angeordnet sein, die kleiner als der zwei- bis dreifachen Durchmesser der Rezirkulationsleitung ist.

Falls kein separates Schnellschlussventil vorgehen wird, wird das Regelelement vorzugsweise im Eintrittsbereich der Rezirkulationsleitung angeordnet.

Alle erläuterten Vorteile sind nicht nur in den jeweils angegebenen Kombinationen, sondern auch in anderen Kombinationen oder Alleinstellung verwendbar, ohne den Rahmen der Erfindung zu verlassen. Beispielsweise kann anstelle der Verwendung eines Regelelementes, das ein Schliessen der Rezirkulationsleitung erlaubt, wie eine regelbare Klappe oder ein Ventil, auch ein regelbares Abgasgebläse oder ein Booster als Regelelement vorgesehen werden, dass mit einem Schnellschlussventil kombiniert wird. Vereinfachend ist allgemein die Regelung des Regelelementes beschrieben worden. Diese steht stellvertretend für Regelung oder Steuerung. Dem Fachmann sind verschiedene Regelstrategien, wie Zweipunktregelung, Regelung mit Proportionalregler, Integral- oder IP- Regler bekannt. Weiter sind dem Fachmann verschiedene Reinigungs-und Aufbereitungsmethoden für die rezirkulierten Abgase, wie z.B. eine Gaswäsche, bekannt.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Darstellung eines Gasturbinenkraftwerks mit Rückführung der Abgase;
- Fig. 2: eine schematische Darstellung eines Gasturbinenkraftwerks mit einer Gasturbine mit sequentieller Verbrennung und Rückführung der Abgase; und
- Fig. 3: eine schematische Darstellung eines Gasturbinenkraftwerks mit einer Gasturbine mit sequentieller Verbrennung und Rückführung der Abgase und einem Kohlendioxid- Abscheidsystem.

### WEGE ZUR AUSFÜHRUNG DER ERFINDUNG

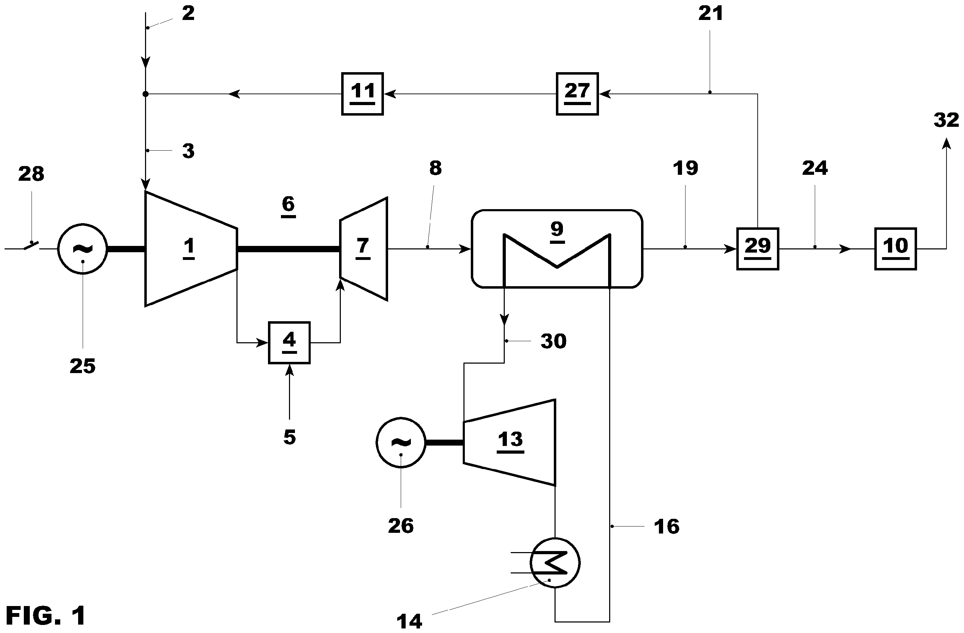

Fig. 1 zeigt in schematischer Darstellung die wesentlichen Elemente eines Gasturbinenkraftwerks. Die Gasturbine 6 umfasst einen Verdichter 1 (Kompressor), die darin verdichtete Verbrennungsluft wird einer Brennkammer 4 zugeführt und dort mit Brennstoff 5 verbrannt. Anschliessend werden die heissen Verbrennungsgase in einer Turbine 7 entspannt. Die in der Turbine 7 erzeugte Nutzenergie wird dann zum Beispiel mit einem auf der gleichen Welle angeordneten ersten Generator 25 in elektrische Energie umgewandelt.

Die aus der Turbine 7 austretenden heissen Abgase 8 werden zur optimalen Nutzung der darin noch enthaltenen Energie in einem Abhitzedampferzeuger 9 (Heat recovery steam generator, HRSG) dazu verwendet, Frischdampf 30 für eine Dampfturbine 13 oder für andere Anlagen zu erzeugen. Die in der Dampfturbine 13 erzeugte Nutzenergie wird zum Beispiel mit einem auf der gleichen Welle angeordneten zweiten Generator 26 in elektrische Energie umgewandelt. Der Wasserdampfkreislauf 39 ist in dem Beispiel vereinfacht und nur schematisch mit einem Kondensator 14 und Speisewasserleitung 16 dargestellt. Verschiedene Druckstufen, Speisewasserpumpen usw. werden nicht gezeigt, da diese nicht Gegenstand der Erfindung sind.

Die Abgase vom Abhitzedampferzeuger 19 werden stromab des Abhitzedampferzeugers 9 in einem Strömungsteiler 29 in einen ersten Abgasteilstrom 21 und einen zweiten Abgasteilstrom 24 geteilt. Der erste Abgasteilstrom 21 wird in die Ansaugleitung der Gasturbine 6 zurückgeführt und dort mit Umgebungsluft 2 vermischt. Der nicht zurückgeführte zweite Abgasteilstrom 24 wird über einen Kamin 32 an die Umgebung abgegeben. Um die Druckverluste der Abgasleitung zu überwinden und als weitere Regelmöglichkeit der Aufteilung der Abgasströme, kann optional ein Abgasgebläse 11 oder regelbares Abgasgebläse 11 vorgesehen sein.

In dem gezeigten Beispiel ist der Strömungsteiler 29 als Regelelement ausgeführt, das es erlaubt, den Eintritt in die Rezirkulationsleitung zu schliessen, um den Eintritt von Brennstoffrückständen in die Rezirkulationsleitung zu verhindern.

Im Betrieb mit Rezirkulation wird der zurückgeführte Abgasstrom 21 in einem Abgasrückkühler 27, welcher mit Kondensator ausgestattet sein kann, auf etwas über Umgebungstemperatur abgekühlt. Stromab dieses Abgasrückkühlers 27 kann ein Booster oder Abgasgebläse 11 für den Rezirkulationsstrom 21 angeordnet sein. Dieser zurückgeführte Abgasstrom 21 wird mit der Umgebungsluft 2 vermischt, bevor das Gemisch als Ansaugstrom über den Verdichter- Eintritt 3 der Gasturbine 6 zugeführt wird.

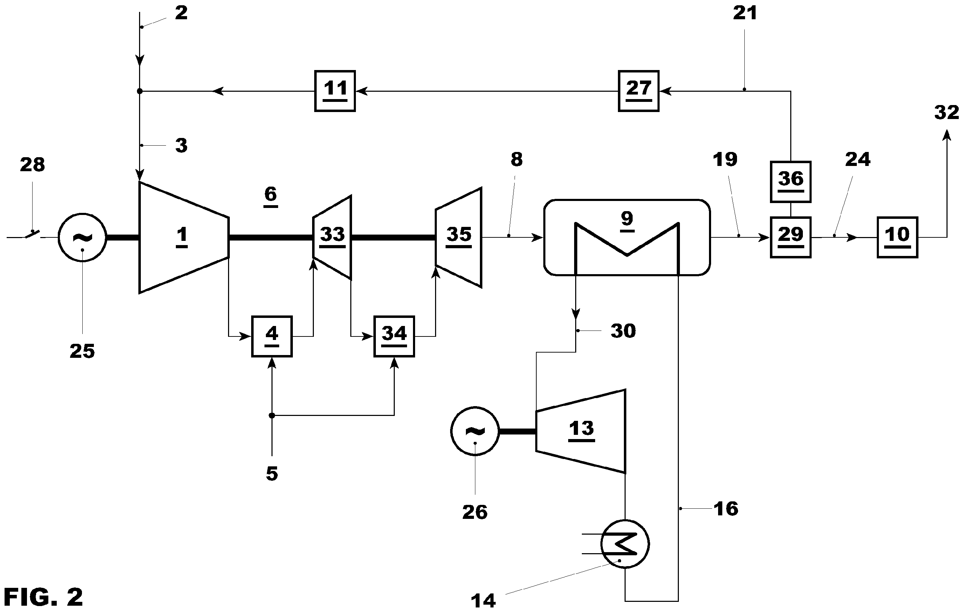

Das Beispiel in Fig. 1 zeigt eine Gasturbine 6 mit einfacher Brennkammer 4. Die Erfindung ist ohne Einschränkung auch für Gasturbinen mit sequentieller Verbrennung, wie sie beispielsweise aus der EP0718470 bekannt sind, anwendbar. In Fig. 2 ist schematisch ein Beispiel für ein Gasturbinenkraftwerk mit sequentieller Verbrennung und Abgasrezirkulation gezeigt. Bei dieser Gasturbine folgt der Brennkammer 4 eine Hochdruckturbine 33. Den unter Arbeitsabgabe teilentspannten Austrittsgasen der Hochdruckturbine 33 wird in der zweiten Brennkammer 34 nochmals Brennstoff 5 zugeführt und verbrannt. Die heissen Verbrennungsgase der zweiten Brennkammer 34 werden in der Niederdruckturbine 35 unter Arbeitsabgabe weiter entspannt. Die Nutzung der Abwärme sowie Rezirkulation erfolgen analog dem Ausführungsbeispiel aus Fig. 1. Zur Regelung und Absperrung des Rezirkulationsstroms ist zusätzlich zu dem Abgasteiler 29, der unverstellbar ausgeführt sein kann, noch ein Regelelement 36 vorgesehen.

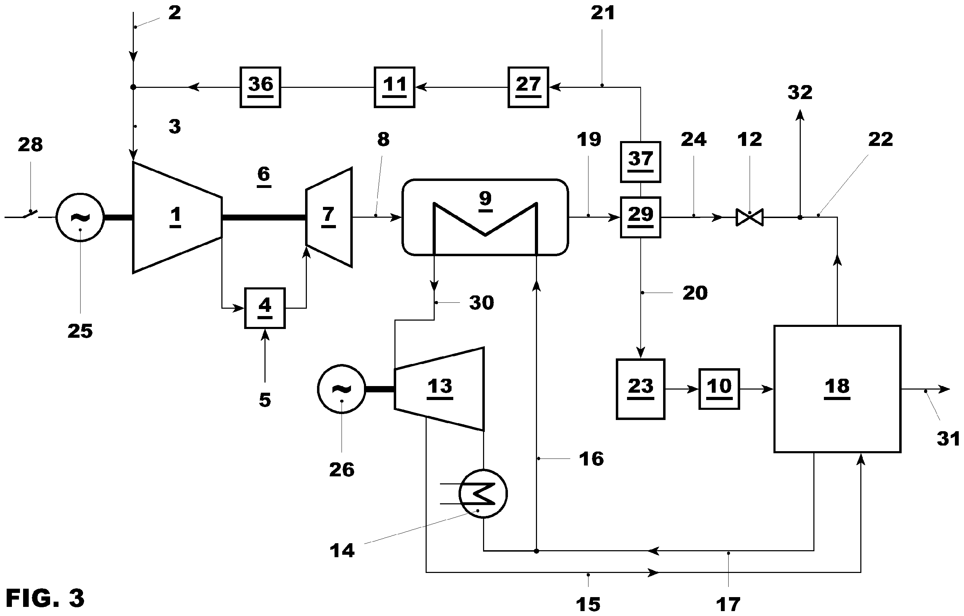

In der Fig. 3 ist basierend auf der Fig. 1 zusätzlich noch ein Kohlendioxid Abscheidsystem 18 dargestellt. Der nicht zurückgeführte zweite Abgasteilstrom 20 wird typischerweise in einem Abgasrückkühler 23 weiter gekühlt und dem Kohlendioxid Abscheidsystem 18 zugeführt. Von diesem werden Kohlendioxid- arme Abgase 22 über einen Kamin 32 an die Umgebung abgegeben. Um die Druckverluste des Kohlendioxid- Abscheidsystems 18 und der Abgasleitung zu überwinden, kann ein Abgasgebläse 10 vorgesehen sein. Das in dem Kohlendioxid- Abscheidsystem 18 abgeschiedene Kohlendioxid 31 wird typischerweise in einem Verdichter (nicht gezeigt) komprimiert und zur Lagerung oder weiteren Behandlung abgeleitet. Das Kohlendioxid- Abscheidsystem 18 ist über eine Dampfextraktion 15 mit Dampf, typischerweise Mittel- oder Niederdruckdampf, der aus der Dampfturbine 13 abgezweigt wird, versorgt. Der Dampf wird dem Wasserdampfkreislauf nach Energieabgabe im Kohlendioxid- Abscheidsystem 18 wieder zurückgeführt. In dem gezeigten Beispiel wird der Dampf kondensiert und über die Kondensatrückführleitung 17 dem Speisewasser zugeführt.

Der zweite Abgasteilstrom kann auch direkt über einen Abgasbypass 24, der eine Bypassklappe oder Ventil umfasst, zu dem Kamin 32 geführt werden.

Zusätzlich zu den in Fig. 1 gezeigtem Ausführungsbeispiel umfasst das Abgasrezirkulationssystem des in Fig. 3 gezeigten Beispiels noch ein separates Regelelement 36 zur Regelung des Rezirkulationsstroms und ein Schnellschlussventil oder eine Schnellschlussklappe 37

### BEZUGSZEICHENLISTE

- 1: Verdichter
- 2: Umgebungsluft
- 3: Verdichter-Eintritt
- 4: Brennkammer, erste Brennkammer
- 5: Brennstoff
- 6: Gasturbine
- 7: Turbine
- 8: Heisse Abgase der Gasturbine
- 9: Abhitzedampferzeuger (heat recovery steam generator, HRSG)
- 10: Abgasgebläse für den zweiten partiellen Abgasstrom (zum Kohlendioxid-Abscheide- System oder Kamin)
- 11: Abgasgebläse für den ersten Abgasteilstrom (Abgasrezirkulation)
- 12: Bypassklappe oder Ventil
- 13: Dampfturbine
- 14: Kondensator
- 15: Dampfextraktion für das Kohlendioxid- Abscheidsystem
- 16: Speisewasserleitung
- 17: Kondensat Rückführleitung
- 18: Kohlendioxid- Abscheidsystem
- 19: Abgas vom Abhitzedampferzeuger
- 20: Zweiter Abgasteilstrom (Abgasleitung zum Kohlendioxid- Abscheidsystem)
- 21: Erster Abgasteilstrom (Abgasrezirkulation)
- 22: Kohlendioxidarmes Abgas
- 23: Abgasrückkühler (für den zweiten Abgasteilstrom)
- 24: Abgasbypass zum Kamin
- 25: Erster Generator
- 26: Zweiter Generator
- 27: Abgasrückkühler (für den ersten Abgasteilstrom)
- 28: Generatorschalter
- 29: Abgasteiler
- 30: Frischdampf
- 31: Abgeschiedenes Kohlendioxid
- 32: Kamin
- 33: Hochdruckturbine
- 34: zweite Brennkammer
- 35: Niederdruckturbine
- 36: Regelelement
- 37: Schnellschlussventil oder Schnellschlussklappe

- Pₒₙ: Einschaltlast
- P_{off}: Ausschaltlast

## Patentansprüche

1. Verfahren zum Betrieb eines Gasturbinenkraftwerkes mit Abgasrezirkulation, welches eine Gasturbine (6), einen Abhitzedampferzeuger (9) und einen Abgasteiler (29), der die Abgase (19) des Gasturbinenkraftwerkes in einen ersten Abgasstrom (21) zur Rezirkulation in einen Ansaugstrom der Gasturbine (6) und in einen zweiten Abgasstrom (24) zur Abgabe an die Umgebung teilt, sowie ein Regelelement (11, 29) zur Regelung des ersten Abgasstroms (21) umfasst, wobei das Regelelement (11, 29) bis zum Erreichen einer Freigabebedingung in einer geschlossenen Position bleibt, in der der gesamte Abgasstrom (19) des Gasturbinenkraftwerkes als zweiter Abgasstrom (24) an die Umgebung abgegeben wird und erst nach Erreichen der Freigabebedingung öffnet, um einen Teil der Abgase (19) als ersten Abgasstrom (21) in den Ansaugstrom zu rezirkulieren, **dadurch gekennzeichnet, dass** die Freigabebedingung das Überschreiten einer Einschaltlast (Pₒₙ) ist und das Regelelement (11, 29) zur Regelung des ersten Abgasstroms (21) erst nach Überschreiten einer Einschaltlast (Pₒₙ) öffnet, um einen Teil der Abgase (19) als ersten Abgasstrom (21) in den Ansaugstrom zu rezirkulieren.

2. Verfahren nach Anspruch 1, **dadurch gekennzeichnet, dass** das Regelelement (11, 29) bei Unterschreiten einer Ausschaltbedingung geschlossen wird, und der gesamte Abgasstrom (19) des Gasturbinenkraftwerkes als zweiter Abgasstrom (24) an die Umgebung abgegeben wird.

3. Verfahren nach Anspruch 2, **dadurch gekennzeichnet, dass** die Ausschaltbedingung das Unterschreiten einer Ausschaltlast (P_{off}) ist.

4. Verfahren nach Anspruch 3, **dadurch gekennzeichnet, dass** die Ausschaltlast (P_{off}) kleiner als die Einschaltlast (Pₒₙ) ist.

5. Verfahren nach Anspruch 1, **dadurch gekennzeichnet, dass** die Einschaltlast (Pₒₙ) kleiner oder gleich der Minimallast der Gasturbine (6) ist und sobald der Generator (25) der Gasturbine (6) mit dem Netz synchronisiert ist und der Generatorschalter (28) geschlossen ist das Regelelement (11, 29) öffnet, um einen Teil der Abgase (19) als ersten Abgasstrom (21) in den Ansaugstrom zu rezirkulieren.

6. Verfahren nach einem der Ansprüche 1 bis 5, **dadurch gekennzeichnet, dass** das Regelelement (11, 29) beim Öffnen des Generatorschalters (28) geschlossen wird, und der gesamte Abgasstrom (19) des Gasturbinenkraftwerkes als zweiter Abgasstrom (24) an die Umgebung abgegeben wird.

7. Verfahren nach einem der Ansprüche 1 bis 6, **dadurch gekennzeichnet, dass** das Regelelement (11, 29) schneller geschlossen wird, als Abgas, das aus der Turbine (7) austritt, benötigt, um durch den HRSG (9) zu strömen.

8. Verfahren zum Betrieb eines Gasturbinenkraftwerkes mit Abgasrezirkulation nach einem der Ansprüche 1 bis 7, **dadurch gekennzeichnet, dass** die Gasturbine eine erste und eine zweite Brennkammer umfasst, und dass das Regelelement (11, 29) vor oder bei einem Abschalten der zweiten Brennkammer geschlossen wird damit der gesamte Abgasstrom (19) des Gasturbinenkraftwerkes als zweiter Abgasstrom (24) an die Umgebung abgegeben wird.

9. Verfahren zum Betrieb eines Gasturbinenkraftwerkes mit Abgasrezirkulation nach einem der Ansprüche 1 bis 7, **dadurch gekennzeichnet, dass** im Ölbetrieb der Gasturbine das Regelelement (11, 29) vor einem Spülen der Ölleitungen des Brennstoffverteilsystems der Brennkammer (4) geschlossen wird, damit während des Spülvorganges der gesamte Abgasstrom (19) des Gasturbinenkraftwerkes als zweiter Abgasstrom (24) an die Umgebung abgegeben wird.

10. Verfahren zum Betrieb eines Gasturbinenkraftwerkes mit Abgasrezirkulation nach einem der Ansprüche 1 bis 7, **dadurch gekennzeichnet, dass** die Gasturbine eine erste und eine zweite Brennkammer umfasst, und dass im Ölbetrieb der Gasturbine das Regelelement (11, 29) vor einem Spülen der Ölleitungen des Brennstoffverteilsystems der zweiten Brennkammer (34) geschlossen wird, damit während des Spülvorganges der gesamte Abgasstrom (19) des Gasturbinenkraftwerkes als zweiter Abgasstrom (24) an die Umgebung abgegeben wird.

## Claims

1. Method for operating a gas turbine power plant with exhaust gas recirculation, comprising a gas turbine (6), a waste heat steam generator (9), an exhaust gas splitter (29) which splits the exhaust gases (19) of the gas turbine power plant into a first exhaust gas stream (21) for recirculation into an intake stream of the gas turbine (6) and a second exhaust gas stream (24) for discharge to the environment, and a control element (11, 29) for controlling the first exhaust gas stream (21), wherein the control element (11, 29), until reaching a release condition, remains in a closed position in which the entire exhaust gas stream (19) of the gas turbine power plant is discharged to the environment as the second exhaust gas stream (24), and only opens after reaching the release condition in order to recirculate part of the exhaust gases (19) into the intake stream as the first exhaust gas stream (21), **characterised in that** the release condition is the exceeding of a switch-on load (Pₒₙ), and to regulate the first exhaust gas stream (21), the control element (11, 29) only opens after the load exceeds a switch-on load (Pₒₙ) in order to recirculate part of the exhaust gases (19) into the intake stream as the first exhaust gas stream (21).

2. Method according to claim 1, **characterised in that** the control element (11, 29) is closed when the load falls below a switch-off condition, and the entire exhaust gas stream (19) of the gas turbine power plant is discharged to the environment as the second exhaust gas stream (24).

3. Method according to claim 2, **characterised in that** the switch-off condition is the falling below of a switch-off load (P_{off}).

4. Method according to claim 3, **characterised in that** the switch-off load (P_{off}) is lower than the switch-on load (Pₒₙ).

5. Method according to claim 1, **characterised in that** the switch-on load (Pₒₙ) is lower than or equal to the minimum load of the gas turbine (6), and as soon as the generator (25) of the gas turbine (6) is synchronised with the network and the generator switch (28) is closed, the control element (11, 29) opens to recirculate part of the exhaust gases (19) into the intake stream as the first exhaust gas stream (21).

6. Method according to any of claims 1 to 5, **characterised in that** the control element (11, 29) is closed on opening of the generator switch (29) and the entire exhaust gas stream (19) of the gas turbine power plant is discharged to the environment as the second exhaust gas stream (24).

7. Method according to any of claims 1 to 6, **characterised in that** the control element (11, 29) is closed faster than the exhaust gas emerging from the turbine (7) requires in order to flow through the HRSG (9).

8. Method for operating a gas turbine power plant with exhaust gas recirculation according to any of claims 1 to 7, **characterised in that** the gas turbine comprises a first and a second combustion chamber, and that the control element (11, 29) is closed before or on shut-off of the second combustion chamber so that the entire exhaust gas stream (19) of the gas turbine power plant is discharged to the environment as the second exhaust gas stream (24).

9. Method for operating a gas turbine power plant with exhaust gas recirculation according to any of claims 1 to 7, **characterised in that** in oil-fired mode of the gas turbine, the control element (11, 29) is closed before flushing of the oil lines of the fuel distribution system of the combustion chamber (4) so that during the flushing process, the entire exhaust gas stream (19) of the gas turbine power plant is discharged to the environment as the second exhaust gas stream (24).

10. Method for operating a gas turbine power plant with exhaust gas recirculation according to any of claims 1 to 7, **characterised in that** the gas turbine comprises a first and a second combustion chamber, and in oil-fired mode of the gas turbine, the control element (11, 29) is closed before flushing of the oil lines from the fuel distribution system of the second combustion chamber (34) so that during the flushing process, the entire exhaust gas stream (19) of the gas turbine power plant is discharged to the environment as the second exhaust gas stream (24).

## Revendications

1. Procédé d'exploitation d'une centrale énergétique à turbine à gaz avec remise en circulation des gaz d'échappement, qui comprend une turbine à gaz (6), un générateur de vapeur à récupération de chaleur (9) et un répartiteur de gaz d'échappement (29), qui répartit les gaz d'échappement (19) de la centrale énergétique à turbine à gaz en un premier flux de gaz d'échappement (21) pour la remise en circulation vers un flux d'aspiration de la turbine à gaz (6) et en un deuxième flux de gaz d'échappement (24) destiné à être évacué vers l'environnement, ainsi qu'un élément de régulation (11, 29) pour la régulation du premier flux de gaz d'échappement (21), l'élément de régulation (11, 29) restant, jusqu'à ce qu'une condition de libération soit atteinte, dans une position fermée, dans laquelle la totalité du flux de gaz d'échappement (19) de la centrale énergétique à turbine à gaz est évacué vers l'environnement sous la forme du deuxième flux de gaz d'échappement (24) et ne s'ouvre qu'une fois que la condition de libération est atteinte, afin de remettre en circulation une partie des gaz d'échappement (19) sous la forme d'un premier flux de gaz d'échappement (21) dans le flux d'aspiration, **caractérisé en ce que** la condition de libération est le dépassement d'une charge de mise en marche (Pₒₙ) et l'élément de régulation (11, 29) pour la régulation du premier flux de gaz d'échappement (21) ne s'ouvre qu'après le dépassement d'une charge de mise en marche (Pₒₙ), afin de remettre en circulation une partie des gaz d'échappement (19) sous la forme d'un premier flux de gaz d'échappement (21) dans le flux d'aspiration.

2. Procédé selon la revendication 1, **caractérisé en ce que** l'élément de régulation (11, 29) est fermé lors d'un passage en dessous d'une condition d'arrêt et la totalité du flux de gaz d'échappement (19) de la centrale énergétique à turbine à gaz est évacuée vers l'environnement sous la forme d'un deuxième flux de gaz d'échappement (24).

3. Procédé selon la revendication 2, **caractérisé en ce que** la condition d'arrêt est le passage en dessous d'une charge d'arrêt (P_{off}).

4. Procédé selon la revendication 3, **caractérisé en ce que** la charge d'arrêt (P_{off}) est inférieure à la charge de mise en marche (Pₒₙ).

5. Procédé selon la revendication 1, **caractérisé en ce que** la charge de mise en marche (Pₒₙ) est inférieure ou égale à la charge minimale de la turbine à gaz (6) et, dès que le générateur (25) de la turbine à gaz (6) est synchronisé avec le réseau et le commutateur de générateur (28) est fermé, l'élément de régulation (11, 29) s'ouvre afin de remettre en circulation une partie des gaz d'échappement (19) sous la forme d'un premier flux de gaz d'échappement (21) dans le flux d'aspiration.

6. Procédé selon l'une des revendications 1 à 5, **caractérisé en ce que** l'élément de régulation (11, 29) est fermé lors de l'ouverture du commutateur de générateur (28) et la totalité du flux de gaz d'échappement (19) de la centrale énergétique à turbine à gaz est évacuée vers l'environnement sous la forme d'un deuxième flux de gaz d'échappement (24).

7. Procédé selon l'une des revendications 1 à 6, **caractérisé en ce que** l'élément de régulation (11, 29) est fermé plus rapidement que ne le nécessite le gaz d'échappement qui sort de la turbine (7) pour traverser le HRSG (9).

8. Procédé d'exploitation d'une centrale énergétique à turbine à gaz avec remise en circulation des gaz d'échappement selon l'une des revendications 1 à 7, **caractérisé en ce que** la turbine à gaz comprend une première et une deuxième chambre de combustion, et **en ce que** l'élément de régulation (11, 29) est fermé avant ou lors d'un arrêt de la deuxième chambre de combustion, afin que la totalité du flux de gaz d'échappement (19) de la centrale énergétique à turbine à gaz soit évacuée vers l'environnement sous la forme d'un deuxième flux de gaz d'échappement (24).

9. Procédé d'exploitation d'une centrale énergétique à turbine à gaz avec remise en circulation des gaz d'échappement selon l'une des revendications 1 à 7, **caractérisé en ce que**, dans le fonctionnement avec de l'huile de la turbine à gaz, l'élément de régulation (11, 29) est fermé avant un nettoyage des conduites d'huile du système de distribution de carburant de la chambre de combustion (4) afin que, pendant le processus de nettoyage, la totalité du flux de gaz d'échappement (19) de la centrale énergétique à turbine à gaz soit évacuée vers l'environnement sous la forme d'un deuxième flux de gaz d'échappement (24).

10. Procédé d'exploitation d'une centrale énergétique à turbine à gaz avec remise en circulation des gaz d'échappement selon l'une des revendications 1 à 7, **caractérisé en ce que** la turbine à gaz comprend une première et une deuxième chambre de combustion et **en ce que**, dans le fonctionnement avec de l'huile de la turbine à gaz, l'élément de régulation (11, 29) est fermé avant un nettoyage des conduites d'huiles du système de distribution de carburant de la deuxième chambre de combustion (34) afin que, pendant le processus de nettoyage, la totalité du flux de gaz d'échappement (19) de la centrale énergétique à turbine à gaz soit évacuée vers l'environnement sous la forme d'un deuxième flux de gaz d'échappement (24).
